(19) **Europäisches Patentamt**
**European Patent Office**
**Office européen des brevets**

(11) **EP 1 431 722 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
*G01F 23/18* *(2006.01)*   *G01F 23/16* *(2006.01)*

(21) Anmeldenummer: **03019059.9**

(22) Anmeldetag: **22.08.2003**

(54) **Differenzdrucksensor zur Messung der Höhe der Flüssigkeit in einem Tank**

Differential pressure sensor for measuring the liquid level in a container

Capteur de pression différentielle pour la mesure du niveau du liquide dans un récipient

(84) Benannte Vertragsstaaten:
**DE FR GB IT**

(30) Priorität: **17.12.2002 DE 10258864**
**27.05.2003 DE 10324009**

(43) Veröffentlichungstag der Anmeldung:
**23.06.2004 Patentblatt 2004/26**

(73) Patentinhaber: **ROBERT BOSCH GMBH**
**70442 Stuttgart (DE)**

(72) Erfinder:
• **Stoehr, Hans-Harald**
**71636 Ludwigsburg (DE)**
• **Ripper, Wolfgang**
**70372 Stuttgart (DE)**
• **Strohmaier, Rainer**
**70563 Stuttgart (DE)**
• **Wickert, Stefan**
**73095 Albershausen (DE)**
• **Driedger, Guenter**
**71739 Oberriexingen (DE)**
• **Gerlach, Michael**
**71336 Waiblingen-Neustadt (DE)**

• **Marx, Klaus**
**70563 Stuttgart (DE)**
• **Pfaff-Rollwagen, Matthias**
**70372 Stuttgart (DE)**
• **Schauer, Wolfgang**
**70839 Gerlingen (DE)**
• **Kamp, Bernhard**
**71640 Ludwigsburg (DE)**
• **Reichelt, Michael**
**73779 Deizisaus (DE)**
• **Dehn, Johannes**
**73732 Esslingen (DE)**
• **Goldmann, Cornelia**
**74291 Erligheim (DE)**
• **Oberascher, Achim**
**73650 Winterbach (DE)**
• **Offenhuber, Michael**
**5421 (AT)**
• **Zerbin, Siegfried**
**73565 Hinterlintal (DE)**

(56) Entgegenhaltungen:
DE-A1- 3 714 956   DE-A1- 3 929 344
DE-A1- 4 112 559   DE-A1- 19 638 476
US-A- 5 245 869

**Beschreibung**

Die Erfindung betrifft einen Differenzdrucksensor zur Messung der Höhe der Flüssigkeit in einem Tank eines Dosiersystems, wobei in dem Tank eine Flüssigkeit, insbesondere Harnstoff-Wasser-Lösung, eingefüllt ist, und eine Verwendung dieses Differenzdrucksensors zur Bestimmung der Dichte einer Flüssigkeit.

Stand der Technik

Es ist aus dem Stand der Technik bekannt, den Füllstand einer Flüssigkeit in einem Tank mit Hilfe von Drucksensoren zu ermitteln. Insbesondere durch Ermittlung der Druckdifferenz zwischen zwei Messpunkten kann die Höhe einer Wassersäule gemessen werden.

Auch in mit Harnstoff-Wasser-Lösungen gefüllten Tanks ist es bekannt, den Füllstand der Tanks zu ermitteln. So wird der Füllstand eines Tanks, gefüllt mit Harnstoff-Wasser-Lösung, mit Hilfe der sogenannten Echolot-Methode ermittelt. Ein vom Echolot ausgehender Ultraschall-Impuls wird vom Boden des Tanks ausgesandt und an der Flüssigkeitsoberfläche reflektiert. Aus der bekannten Laufzeit der Schallwellen in der Flüssigkeit wird der Füllstand ermittelt. Diese Methode weist mehrere Nachteile auf. Zum einen ist diese Methode kostenintensiv. Ein Echolot, welches Materialien aufweist, die gegenüber einer Harnstofflösung resistent sind, ist teuer herzustellen. Zum anderen kann das Echolot insbesondere bei großen Füllhöhen wegen des daraus resultierenden hohen Stromverbrauchs nicht mit Batterien betrieben werden. Dies verursacht erhöhten Energieaufwand und beeinflusst somit beispielsweise den Energieverbrauch einer Brennkraftmaschine. Außerdem ist diese Methode nur bei Tanks einsetzbar, bei denen die Ultraschall-Wellen nicht durch Hindernisse an ihrer Ausbreitung gehindert bzw. reflektiert werden. Dies reduziert die möglichen Bauformen des Tanks erheblich.

Eine weitere Methode der Füllstandsmessung in Flüssigkeitstanks stellt die Druckmessung mit kapazitiven Sensoren dar. Bei der Druckmessung mit kapazitiven Sensoren macht man sich die Abstandsänderung der beiden Kondensatorplatten in Abhängigkeit vom Druck zu Nutze. Problematisch sind auch hier die relativ hohen Kosten. Der Einsatz von kapazitiven Sensoren in einer Harnstofflösung verursacht hohe Kosten, da spezielle harnstoffresistente Kondensatorplatten benötigt werden. Desweiteren muss der Sensor gegen das Gefrieren der Harnstoff-Wasser-Lösung resistent sein.

Aus der DE 197 55 056 A1 ist bekannt, einen Referenzdruck durch Auffüllen eines Messrohrs bis zu einer bestimmten Höhe bereitzustellen.

Nachteilig bei diesem bekannten Stand der Technik ist; dass eine zuverlässige Messung des Füllstands nur bei zusätzlicher Bereitstellung einer Flüssigkeitssäule von bekannter Höhe möglich ist.

Die DE 3929344 beschreibt eine Füllstandsanzeige für Brennstoffbehälter mit einer Differenzdruckmesssonde.

Die DE 4112559 zeigt einen Flüssigkeitsbehälter, bei dem eine Füllstandsmessung unter Verwendung einer nach dem Venturiprinzip arbeitenden Strahlpumpe erfolgt.

Vorteile der Erfindung

Der Gegenstand des unabhängigen Anspruchs hat demgegenüber den Vorteileines einfachen und robusten Aufbaus, der insbesondere hinsichtlich der Erstarrung einer als Flüssigkeit verwendeten Harnstoff-Wasser-Lösung bei -11 Grad Celsius von Bedeutung ist. Der erfindungsgemäße Differenzdrucksensor kann insbesondere zur kontinuierlichen Messung der Höhe der Flüssigkeit in einem Tank für ein Dosiersystem für aggressive Flüssigkeiten verwendet werden und ist bei unterschiedlichen Tankformen einsetzbar. Durch die Maßnahme, einen Differenzdrucksensor mit zumindest einem ersten, nicht verformbaren, flüssigkeitsresistenten Drucküberträger insbesondere zur Messung des Drucks am Boden des Tanks zu schaffen, ist es auf einfache und kostengünstige Art und Weise möglich, die Höhe auch aggressiver Flüssigkeiten in einem Tank für ein Dosiersystem zu bestimmen, wobei die Form des Tanks beliebig sein kann. Vorteilhaft ist, dass der Differenzdrucksensor zumindest einen ersten, durch den hydrostatischen Druck der Flüssigkeit möglichst leicht verformbaren Druckaufnehmer, insbesondere eine Membran, aufweist. Durch das Abschließen des die Höhendifferenz des Tanks überwindendenden Drucküberträgers mit einem Druckaufnehmer wird das Problem einer zufälligen Signaländerung, das sich bei einer offenen Leitung ergibt, vermieden. Der Differenzdrucksensor bildet ein geschlossenes System, wobei sich in dem System das druckübertragende Medium befindet. Eine offene Leitung hätte zum Nachteil, dass sie eine Flüssigkeitsfalle darstellen würde. In diese kann durch Schwappen des Tankinhalts oder Kondensation aus der Gasphase Flüssigkeit hineinbefördert werden. Umgekehrt kann in der Leitung befindliche Flüssigkeit durch Stöße aus der Leitung heraus befördert werden. Hierdurch ergeben sich zufällige Signaländerungen, die eine Füllstandsmessung stören.

Der Differenzdrucksensor weist vorteilhafterweise zumindest einen durch den hydrostatischen Druck der Flüssigkeit nicht verformbaren, flüssigkeitsresistenten, zweiten Drucküberträger auf. Dieser zweite Drucküberträger ist in gleicher Weise wie der erste Drucküberträger mit einem Druckaufnehmer abgeschlossen. Bei zwei Druckaufnehmern kann die Messeinheit des Differenzdrucksensors in beliebiger Höhe positioniert sein. Werden zwei Druckaufnehmer verwendet, so hat dies den Vorteil, dass die verwendete Messeinheit des Differenzdrucksensors nicht gegen die in dem Tank vorhandene Flüssigkeit, sondern lediglich gegen das in den Drucküberträgern vorhandene Medium resistent sein muss. Dies kann insbesondere dann von Vorteil sein, wenn die im Tank vorhandene Flüssigkeit gefrieren kann.

Weitere Vorteile ergeben sich durch die weiteren in den abhängigen Ansprüchen und in der Beschreibung genannten Merkmale.

Der Drucküberträger ist insbesondere gegenüber Harnstoff-Wasser-Lösung bzw. gegen Flüssigkeiten resistent, die als Reduktionsmittel zur Reduktion von $NO_x$ in Abgasen von Brennkraftmaschinen eingesetzt werden. Der Drucküberträger verläuft über die gesamte Höhe des Tanks bis hin zum Boden. Drucküberträgern zugehörige Leitungen können innerhalb oder außerhalb des Tanks angeordnet sein. Die Form des Drucküberträgers kann je nach Ausgestaltung des Tanks beliebig sein. Der Drucküberträger weist ein Material auf, welches durch den hydrostatischen Druck der Flüssigkeit nicht verformbar ist.

Die druckdichten Drucküberträger können durch einen leicht verformbaren Druckaufnehmer, insbesondere eine flexible Membran, die aus Gummi, Kunststoff oder Metall bestehen kann, in zwei Kammern unterteilt werden. Eine Kammer ist mit der Messeinheit des Differenzdrucksensors verbunden. Unterscheidet sich der Druck in den Kammern, so wölbt sich die Membran in Richtung des geringeren Drucks. In weiterer Ausgestaltung der Erfindung kann ein Druckaufnehmer als Faltenbalg mit geringer Federkonstante ausgebildet sein. Alternativ wäre eine Ausbildung als ein mit Flüssigkeit gefüllter Ballon bzw. ein Säckchen aus einer reißfesten Folie oder einem reißfesten Gewebe denkbar.

Zweckmäßigerweise weisen sowohl der erste Drucküberträger, als auch der zweite Drucküberträger die Form eines länglichen Hohlprofils auf. In diesem Hohlprofil befindet sich ein druckübertragendes Medium. Dies kann beispielsweise Luft oder Öl sein.

Idealerweise ist ein Druckaufnehmer, der sogenannte Mess-Druckaufnehmer, am Boden des Behälters angeordnet. Ein zweiter Druckaufnehmer, der sogenannte Referenz-Druckaufnehmer, befindet sich im oberen Bereich des Tanks, nahe der Tankoberseite. Der Referenz-Druckaufnehmer dient der Messung des Gasdrucks oberhalb des Flüssigkeitspegels, um eine temperaturunabhängige und damit sichere Bestimmung der Füllhöhe im Tank zu gewährleisten.

Durch die Ausdehnung des Mess-Druckaufnehmers am Boden des Tanks wird der Messeinheit des Differenzdrucksensors über das druckübertragende Medium ein Signal übermittelt. Um ein von Temperaturschwankungen unabhängiges Signal zu erhalten, sollte sich das druckübertragende Medium ausdehnen oder zusammenziehen können, ohne dass der Druck innerhalb des Drucküberträgers bzw. des Druckaufnehmer vom Umgebungsdruck abweicht. Das druckübertragende Medium ist so beschaffen, dass Druckschwankungen in der Umgebung nicht dazu führen, dass der Druck innerhalb des Drucküberträgers bzw. des Druckaufnehmers sich vom Umgebungsdruck unterscheidet. Die Druckaufnehmer weisen idealerweise eine möglichst geringe Federkonstante auf. Weiterhin hat das druckübertragende Medium eine möglichst geringe Kompressibilität und einen möglichst geringen thermischen Ausdehnungskoeffizienten.

Zweckmäßigerweise ist das Material eines Drucküberträgers und eines Druckaufnehmers gegen die Flüssigkeit im Tank, insbesondere gegen Harnstoff, resistent. Von Vorteil ist es, wenn das Material eines Drucküberträgers und eines Druckaufnehmers ein harnstoffresistenter Thermoplast bzw. harnstoffresistentes Elastomer oder Metall ist. Thermoplaste, wie beispielsweise IXEF, PA66, PTFE, PPS-Zusammensetzungen, PEEK oder PVDF, erweisen sich als besonders geeignete Materialien, die insbesondere gegenüber Harnstoff resistent sind. Aber auch Elastomere, wie BR, CR, HNBR, NR, FPM, EPDM oder NBR, sowie Metalle, wie V4A-Stahl, sind geeignete Materialien.

Ein Abgleich der Kennlinie des Differenzdrucksensor ist möglich, wenn sowohl der Mess-Druckaufnehmer als auch der Referenz-Druckaufnehmer so in dem Tank angeordnet sind, dass die Flüssigkeit im Tank beide Druckaufnehmer umschließen kann, wenn der Tank vollständig gefüllt ist. Der Abgleich der Kennlinie erfolgt, wenn der Tankstand höher steigt als der Referenz-Druckaufnehmer. Dann ist das Signal an der Messeinheit des Differenzdrucksensors unabhängig von der Füllhöhe des Tanks. Der Abgleich ist auch dann möglich, wenn wie oben geschildert, auf einen zweiten Druckaufnehmer bzw. Drucküberträger verzichtet wird. In diesem Falle muß der Tank soweit mit Flüssigkeit gefüllt sein, daß der Flüssigkeitspegel sowohl den Druckaufnehmer als auch die Meßeinheit des Referenzdrucksensors übersteigt.

Von großem Vorteil ist es, dass der Differenzdrucksensor in einem Dosiersystem einsetzbar ist, welches an einen Abgastrakt einer Brennkraftmaschine, insbesondere eines Fahrzeugmotors, angeschlossen ist.

Weiterhin vorteilhaft ist es, dass der Differenzdrucksensor in Flüssigkeiten, die als Reduktionsmittel zur Verringerung der $NO_x$-Emissionen des Abgases einer Brennkraftmaschine dienen, einsetzbar ist.

In einer vorteilhaften Ausführung der Erfindung sind die Druckaufnehmer und im Tank angebrachte Drucküberträger durch einen mechanischen Schutz, insbesondere durch eine Ummantelung geschützt. Dadurch ist gewährleistet, dass die Druckaufnehmer und Drucküberträger gegen ein etwaiges Umherschlagen von gefrorenen Blöcken aus Harnstoff-Wasser-Lösung geschützt ist.

Des weiteren kann der erfindungsgemäße Differenzdrucksensor zur Bestimmung der Dichte einer Flüssigkeit verwendet werden. Im Falle des Harnstoff-Dosiersystems lässt sich mit einer derartigen Verwendung in einfacher Weise erkennen, ob der Tank mit einer anderen Flüssigkeit als Harnstoff-Wasser-Lösung, z. B. mit Wasser- oder Dieselkraftstoff, gefüllt wurde. Die Dichte des druckübertragenden Mediums ist möglichst gleich der des vom Fahrzeugnutzer in den Tank zu füllenden flüssigen Mediums. Durch diese Maßnahme werden mögliche, durch Schrägstellen oder Beschleunigen des Fahrzeugs hervorgerufene Messfehler minimiert.

In besonders vorteilhafter Ausgestaltung des Differenzdrucksensors kann vorgesehen sein, die beiden Drucküberträger nicht senkrecht übereinander sondern in zwei Raumrichtungen versetzt anzuordnen. Bei einem schrägstehenden Fahrzeug würde sich bei einer derartigen Anordnung der Drucküberträger kein systematischer Messfehler ergeben (aufgrund zu geringer effektiver Messhöhe wird keine systematisch zu geringe Dichte oder Füllhöhe angezeigt). Die effektive Messhöhe wird in zufälliger Weise wechselnd erhöht und erniedrigt. Die Auswertung des Signals erfolgt durch Mittelung über mehrere Messwerte, somit ergibt sich ein korrektes Signal.

Zeichnung

Weitere Einzelheiten und Vorteile des Differenzdrucksensors ergeben sich aus der nachfolgenden Beschreibung und der zugehörigen Zeichnung, in der bevorzugte Differenzdrucksensoren mit den dazu notwendigen Einzelheiten dargestellt sind. Es zeigen

Figur 1     einen Differenzdrucksensor in einem Tank für aggressive Flüssigkeiten eines Dosiersystems,

Figur 2     einen Differenzdrucksensor in einem Tank für aggressive Flüssigkeiten eines Dosiersystems, in einem alternativen Ausführungsbeispiel, und

Figur 3     einen Differenzdrucksensor in einem Flüssigkeitstank, bei dem der zweite Druckaufnehmer zur Messung eines Gasdruckes eingesetzt wird.

Vorteilhafte Ausführungsformen

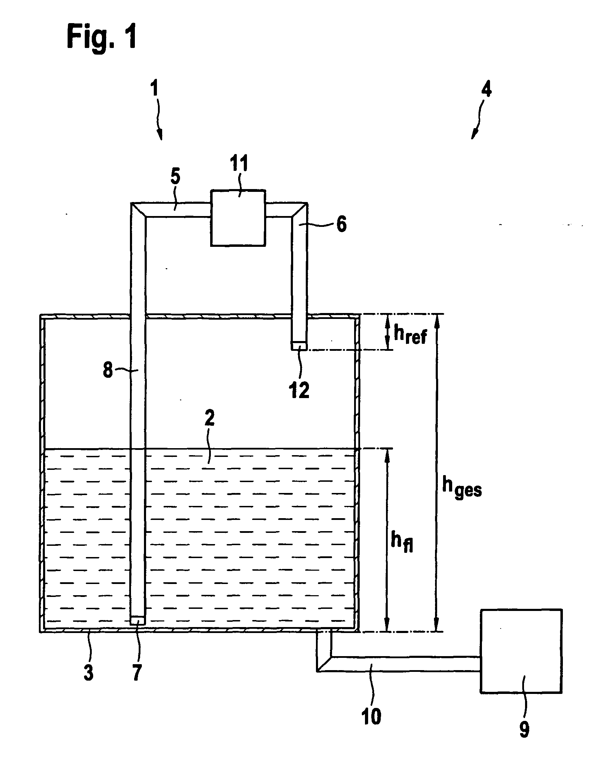

Figur 1 zeigt ein Dosiersystem 4 mit einer Dosiervorrichtung 9 und einem Tank 3 für aggressive Flüssigkeiten 2. Die Flüssigkeit 2 gelangt von dem Tank 3 über eine Leitung 10 zu der Dosiervorrichtung 9. Das Dosiersystem 4 ist einsetzbar, um Flüssigkeit, insbesondere Reduktionsmittel, in den Abgastrakt einer Brennkraftmaschine zu befördern, damit dadurch die $NO_x$-Emission des Abgases verringert werden kann.

Der Differenzdrucksensor 1 zeigt den Füllstand der Flüssigkeit 2 im Tank 3 des Dosiersystems 4 an. Der Differenzdrucksensor 1 weist einen ersten Drucküberträger 5 auf, welcher von der oberhalb des Tanks 3 liegenden Messeinheit 11 des Differenzdrucksensor 1 über die gesamte Höhe des Tanks 3 bis zum Boden des Tanks 3 verläuft. Am Ende des ersten Drucküberträgers 5 ist ein erster Druckaufnehmer 7 angeordnet. Der erste Druckaufnehmer 7 weist ein leicht verformbares Material auf. Dieser Druckaufnehmer 7 stellt den Mess- Druckaufnehmer dar. Der zweite Druckaufnehmer 12 befindet sich im oberen Bereich des Tanks 3 und stellt den Referenz- Druckaufnehmer dar. Der Differenzdrucksensor 1 bildet ein geschlossenes System. Drucküberträger 5, 6 und Druckaufnehmer 7, 12 umschließen ein druckübertragendes Medium 8 dicht. Das druckübertragende Medium 8 überträgt Druckänderungen am ersten Druckaufnehmer 7 an die Messeinheit 11 weiter. In Abhängigkeit vom hydrostatischen Druck am Druckaufnehmer 7 kann die Füllstandshöhe der Flüssigkeit 2 in dem Tank 3 wie folgt ermittelt werden.

Der von der Messeinheit 11 gemessene Differenzdruck $\Delta p$ errechnet sich wie folgt:

$$\Delta p = p_{meß} - p_{ref}$$

mit

$$p_{meß} = \rho_{fl} g h_{fl} - \rho_{Üb} g h_{ges} + p_{Umgebung}$$

und

$$p_{ref} = -\rho_{Üb} g h_{ref} + p_{Umgebung} \qquad \text{falls } h_{fl} < h_{ges} - h_{ref}$$

$$p_{ref} = \rho_{fl} g (h_{fl} - h_{ges} + h_{ref}) - \rho_{Üb} g h_{ref} + p_{Umgebung}$$
$$\text{falls } h_{fl} > h_{ges} - h_{ref}$$

wobei:

h = Höhe,
g = Erdbeschleunigung,
$\rho$ = Dichte

mit den Indizes:

meß: Messseite,
ref: Referenzseite,
ges: Gesamthöhe des Tanks
Üb: Druckübertragendes Medium
fl: Flüssigkeit im Tank

Fällt der Flüssigkeitspegel unter den zweiten (Referenz-) Druckaufnehmer 12, also $h_{fl} < h_{ges} - h_{ref}$, so ergibt sich für den gemessenen Differenzdruck $\Delta p$:

$$\Delta p = \rho_{fl} g h_{fl} - \rho_{Üb} g \, (h_{ges} - h_{ref})$$

Der gemessenen Differenzdruck $\Delta p$ ist folglich linear von der Füllstandshöhe $h_{fl}$ der Flüssigkeit 2 im Tank 3 abhängig. Da die übrigen Größen in obiger Gleichung bekannt sind, ergibt sich hieraus die jeweilige Füllstandshöhe der Flüssigkeit.

Für den Fall, dass die Füllstandshöhe der Flüssigkeit über den zweiten (Referenz-) Druckaufnehmer 12 liegt, ergibt sich für den gemessenen Differenzdruck $\Delta p$:

$$\Delta p = -\rho_{Üb} \, (h_{ges} - h_{ref}) + \rho_{fl} \, (h_{ges} - h_{ref})$$

Es ist ersichtlich, dass der gemessene Differenzdruck von der tatsächlichen Füllstandshöhe $h_{fl}$ der Flüssigkeit 2 in diesem Fall nicht mehr abhängt.

Ein Abgleich der Kennlinie des Differenzdrucksensors 1 kann erfolgen, wenn der Tankstand höher steigt als der Referenzdruck-Druckaufnehmer. Das Signal wird dann von der Füllhöhe unabhängig.

Ein voller Tank läßt sich von einem Steuergerät erkennen, wenn zum einen eine plötzliche Zunahme des Tankstands erkannt wird und zum anderen eine Flüssigkeitsmenge dem Tank entnommen wird, ohne dass eine Änderung im Differenzdrucksignal beobachtet wird. Die Entnahme der Flüssigkeit lässt sich zum Beispiel im Fall eines Dieselkraftstofftanks verfolgen, indem die dem Motor zugeführte Kraftstoffmenge im Steuergerät verfolgt wird.

Als weiteres Kriterium für einen vollen Tank kann herangezogen werden, dass bei Fahrbetrieb keine oder nur geringe Schwankungen des von der Messeinheit 11 gemessenen Differenzdrucksignals beobachtet werden.

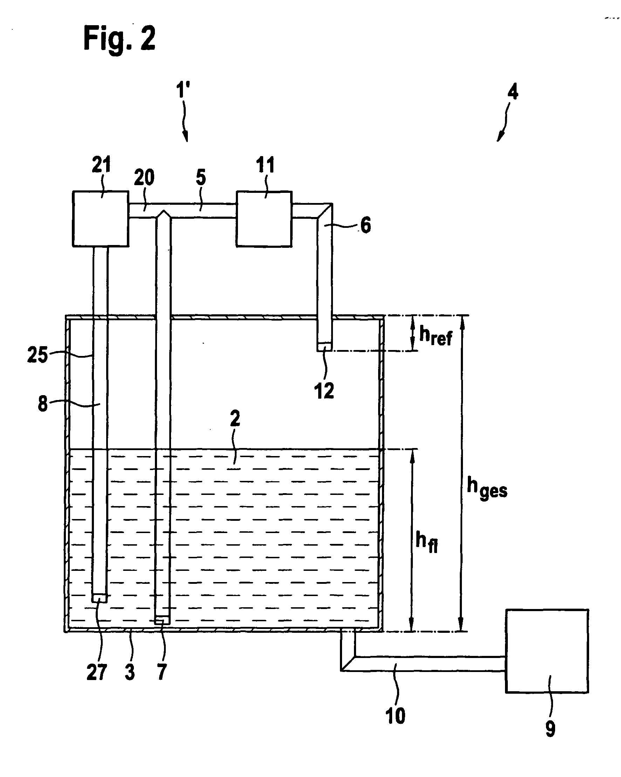

Der in Figur 2 gezeigte Differenzdrucksensor l' des Dosiersystems 4 weist weitgehend dieselben Komponenten wie der Differenzdrucksensor 1 aus Figur 1 auf. An dem ersten Duckübertrager 5 ist zusätzlich eine Abzweigung 20 vorgesehen, welche den ersten Druckübertrager 5 und den ersten Druckaufnehmer 7 mit einer Messeinheit zur Dichtemessung 21 verbindet. Die Messeinheit zur Dichtemessung 21 weist einen dritten Druckübertrager 25 auf. Am Ende des dritten Druckübertragers 25 ist ein dritter Druckaufnehmer 27 angeordnet. Der dritte Druckaufnehmer 27, welcher zur Messung der Dichte der Flüssigkeit 2 ausgebildet ist, ist über die Messeinheit zur Dichtemessung 21 mit dem ersten Druckaufnehmer 7, welcher im unteren Bereich des Tanks 3 angeordnet ist, vereinigt. Bei einer hinreichend genauen driftfreien Messeinheit zur Dichtemessung 21 kann, ohne dass ein Abgleich erforderlich ist, die Dichtemessung bei vollem Tank 3 geschehen.

Die mathematische Beschreibung erfolgt gemäß der oben angegebenen Formeln für den Fall $h_{fl} > h_{ges} - h_{ref}$. Auf den zweiten Druckübertrager 6 und die Messeinheit des Differenzdrucksensors 11 kann verzichtet werden, wenn die dargestellte Einrichtung ausschließlich zur Dichtemessung verwendet werden soll. Im Falle des erfindungsgemäßen Harnstoff-Dosiersystems 4 kann das in Figur 2 gezeigte Ausführungsbeispiel dazu verwendet werden, einen Nachweis dafür zu liefern, dass der Tank 3 mit einer anderen Flüssigkeit als Harnstoff-Wasser-Lösung befüllt worden ist. Es ist beispielsweise denkbar, dass Wasser oder Dieselkraftstoff in den Tank 3 geraten könnte. In vorteilhafter Variante ist die Dichte des druckübertragenden Mediums 8 möglichst gleich der Dichte der in den Tank 3 zu füllenden Flüssigkeit 2. Somit werden durch Schrägstehen oder Beschleunigung des Fahrzeugs während des Fahrbetriebes hervorgerufene Messfehler minimiert.

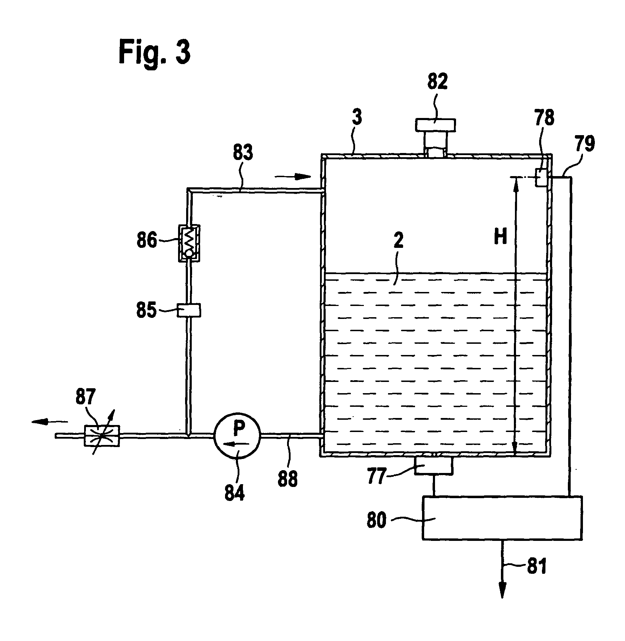

Figur 3 zeigt eine mit einem Tank und einem Dosiersystem verbundene Differenzdrucksensoranordnung. Am Boden des Tanks befindet sich, beispielsweise zentral angeordnet, ein erstes Druckaufnahmeelement 77, und in einer Höhe H über dem Boden des Tanks ist ein zweites Druckaufnahmeelement 78 angeordnet. Der Tank ist hierbei so bemessen, dass seine maximale Füllhöhe, bei der der Tank als "voll" definiert ist, kleiner ist als die Höhe H, so dass das zweite Druckaufnahmeelement auch bei vollem Tank sich oberhalb des Flüssigkeitspegels befindet. Das zweite Druckaufnahmeelement 78 ist über eine Signalleitung 79 mit einer Auswerteschaltung 80 verbunden, ebenso ist das erste Druckaufnahmeelement 77 mit der Schaltung 80 verschaltet. Am Ausgang der Schaltung 81 ist eine Drucksignalleitung angeschlossen, die mit einem Signaleingang eines nicht näher dargestellten Steuergeräts verbunden ist. Der Tank 3 weist im oberen Bereich einen Einfüllstutzen 82 auf. In Bodennähe ist eine Leitung 88 angeschlossen, die über eine Förderpumpe 84 zu einem elektrisch über das Steuergerät ansteuerbaren Dosierventil 87 führt. Über das Dosierventil kann die im Tank enthaltene Flüssigkeit beispielsweise in den Abgastrakt eines Kraftfahrzeugs eingeführt werden. Zwischen Dosierpumpe und Dosierventil zweigt eine Rücklaufleitung 83 von der Leitung 88 ab, die über einen Leitungsdrucksensor 85 und einen Druckregler 86 zum oberen Bereich des Tanks zurückführt.

Das nicht näher dargestellte Steuergerät steuert die Funktion der elektrisch ansteuerbaren Förderpumpe, des elektrisch ansteuerbaren Dosierventils und des elektrisch ansteuerbaren Druckreglers in Abhängigkeit vom Signal des Leitungsdrucksensors 85 und weiterer hier nicht näher dargestellter Daten wie beispielsweise der Drehzahl, der Last des Kraftfahrzeugmotors und gegebenenfalls weiterer Signale von im Abgastrakt angeordneten Abgassensoren. Das an der Drucksignalleitung 81 anliegende Signal dient dem Steuergerät zur Erkennung des Füllstands im Tank, so dass eine Tankstandsanzeige damit gesteuert werden kann oder dass rechtzeitig vor dem Erreichen eines gewissen unteren Pegels eine Warnung im Armaturenbrett eines Lastkraftwagens ausgegeben werden kann, dass beispielsweise eine 32,5%-ige Harnstoff-Wasser-Lösung nachgefüllt werden muss, um weiterhin eine den gesetzlichen Normen genügende Abgasnachbehandlung zu gewährleisten.

Die Füllstandshöhe und das Drucksignal des Druckaufnahmeelements 77 sind hierbei je nach Tankausführung spezifisch und in einer Kennlinie im Steuergerät hinterlegt. Die Erfassung des Füllstands erfolgt vorzugsweise bei stehendem Fahrzeug beim Tanken oder im Leerlauf, um Fehler durch schwappendes Reduktionsmittel beim Fahren auszuschliessen. Bei erhöhter Umgebungstemperatur bis zu 60 Grad Celsius kann sich durch den veränderten Dampfdruck des Reduktionsmittels ein erhöhter Druck im Tank einstellen, der das Füllstandssignal in der Leitung 81 verfälschen würde, wenn es allein auf einem Signal des ersten Druckaufnahmeelements 77 beruhen würde. Dies wird dadurch kompensiert, dass der Gasdruck im oberen Bereich des Tanks vom zweiten Druckaufnahmeelement 78 gemessen und über die Leitung 79 an die Auswerteschaltung 80 weitergeleitet wird, so dass bei entsprechender Auslegung der Auswerteschaltung 80 ein gasdruckkompensiertes Signal an der Leitung 81 anliegt, das gemäß dem oben angesprochenen im Steuergerät abgelegten Kennfeld ein eindeutiges und temperaturunabhängiges Maß für die Füllhöhe ist. In einer einfachen Anordnung wird hierbei in der Auswerteschaltung 80 die Differenz zwischen dem Signal des ersten Druckaufnahmeelements und dem Signal des zweiten Druckaufnahmeelements gebildet. Um ein Leerfahren des Tanks zu vermeiden, wird während der Fahrt der Füllstand des Tanks über eine steuergerätinterne Berechnung des Reduktionsmittelverbrauchs aktualisiert. Der Verbrauch wird hierbei aus den Ansteuerdaten der Dosierung bzw. des Dosierventils (Dosierdruck, Temperatur, Ansteuerdauer, Ansteuerfrequenz etc.) ermittelt und laufend oder in bestimmten Abständen vom zuletzt tatsächlich gemessenen Füllstand subtrahiert. Die Differenz ergibt dann den neuen aktuellen Füllstand. Bei stehendem Fahrzeug kann zusätzlich über eine Druckmessung im Tank ein weiterer Abgleich bezüglich des Füllstandes durchgeführt werden. Dies erhöht die Sicherheit bei der Ermittlung des Füllstands für das Reduktionsmittel zur Erfüllung gesetzlich vorgegebener On-Board-Diagnose-Richtlinien.

In einer Abwandlung kann die Auswerteschaltung 80 durch eine besondere Ausgestaltung des Druckaufnahmeelements 77 ersetzt werden, bei der die Signalleitung 79 durch eine luftdichte Rohrleitung ersetzt wird, die den im oberen Bereich des Tanks herrschenden Gasdruck zum Druckaufnahmeelement 77 führt. Das zweite Druckaufnahmeelement 78 wird in diesem Fall durch ein Druckaufnahmemittel ersetzt, das durch das in den oberen Teil des Tanks ragende offene Ende der Rohrleitung gebildet ist. Das Druckaufnahmeelement 77 generiert dann bei entsprechender mechanischer Bauweise ein elektrisches Signal, das der Druckdifferenz zwischen dem Flüssigkeitsdruck am Boden des Tanks und dem Gasdruck im oberen Bereich des Tanks entspricht.

Unter Druckaufnahmemittel können im Allgemeinen beispielsweise ein offenes Ende eines Drucküberträgers, ein verformbares Teil (Druckaufnehmer) zum Verschluss des offenen Endes eines Drucküberträgers oder ein Druckaufnahmeelement verstanden werden, das ein elektrisches Signal liefert, das mit dem anliegenden Druck bzw. Differenzdruck korreliert.

**Patentansprüche**

1.  Differenzdrucksensor zur Messung der Flüssigkeitshöhe einer in einem Tank eines Dosiersystems eingefüllten Flüssigkeit, insbesondere einer Harnstoff-Wasser-Lösung, wobei ein erstes Druckaufnahmemittel (7, 77) zur Messung eines Drucks am Boden des Tanks und ein zweites Druckaufnahmemittel (12, 78) zur Messung eines Referenzdrucks in einem oberen Bereich des Tanks vorgesehen ist, wobei das zweite Druckaufnahmeinittel in einer solchen Befestigungshöhe ($h_{ges}$-$h_{ref}$, H) des Tanks angeordnet ist, dass das zweite Druckaufnahmemittel (12, 78) höchstens bei Erreichen einer Flüssigkeitshöhe, bei der der Tank als voll definiert ist, von Flüssigkeit (2) umgeben ist, wobei der Differenzdrucksensor (1) zumindest einen ersten, nicht verformbaren, flüssigkeitsresistenten Drucküberträger (5) insbesondere zur Messung des Drucks am Boden des Tanks (3) aufweist, wobei der Differenzdrucksensor (1) zumindest einen nicht verformbaren, flüssigkeitsresistenten, zweiten Drucküberträger (6) insbesondere zur Messung eines Referenzdrucks im oberen Bereich des Tanks (3) aufweist, **dadurch gekennzeichnet, dass** die Druckaufnahmemittel (7, 12) am offenen Ende des jeweiligen Drucküberträgers (5, 6) angeordnet sind und dass der Differenzdrucksensor (1) ein geschlossenes System bildet, wobei ein druckübertragendes Medium (8) von den Drucküberträgern (5, 6) und den Druckaufnahmemitteln (7,12) umschlossen ist, wobei die Druckaufnahmemittel (7, 12) ein verformbares Teil aufweisen.

2. Differenzdrucksensor nach Anspruch 1, **dadurch gekennzeichnet, dass** der bzw. die Drucküberträger (5, 6) die Form eines länglichen Hohlprofils aufweisen.

3. Differenzdrucksensor nach Anspruch 1 oder 2, **dadurch gekennzeichnet, dass** das verformbare Teil eine Membran, ein Faltenbalg oder ein Ballon ist.

4. Differenzdrucksensor nach Anspruch 1, **dadurch gekennzeichnet, dass** das Material der Drucküberträger (5, 6) und der Druckaufnahmemittel (7,12) gegen die Flüssigkeit im Tank (3), insbesondere gegen Harnstoff-Wasser-Lösung, resistent ist.

5. Differenzdrucksensor nach Anspruch 4, **dadurch gekennzeichnet, dass** das Material der Drucküberträger (5, 6) und der Druckaufnahmemittel (7, 12) ein harnstoffresistenter Thermoplast bzw. harnstoffresistentes Elastomer oder Metall ist.

6. Differenzdrucksensor nach einem der vorherigen Ansprüche, **dadurch gekennzeichnet, dass** der Differenzdrucksensor (1) eingerichtet ist zum Einsatz in einem Dosiersystem (4), welches an einen Abgastrakt einer Brennkraftmaschine, insbesondere eines Fahrzeugmotors, angeschlossen ist.

7. Differenzdrucksensor nach einem der vorherigen Ansprüche, **dadurch gekennzeichnet, dass** der Differenzdrucksensor (1) eingerichtet ist zum Einsatz in Flüssigkeiten (2), die als Reduktionsmittel zur Verringerung der $NO_x$-Emissionen des Abgases einer Brennkraftmaschine dienen.

8. Differenzdrucksensor nach einem der vorherigen Ansprüche, **dadurch gekennzeichnet, dass** er eingerichtet ist zum Abgleich einer Kennlinie des Differenzdrucksensors (1) bei vollem Tank.

9. Differenzdrucksensor nach einem der vorherigen Ansprüche, **dadurch gekennzeichnet, dass** ein Steuergerät eingerichtet ist zur Detektion einer (plötzlichen) Zunahme des Tankstands.

10. Differenzdrucksensor nach einem der vorherigen Ansprüche, **dadurch gekennzeichnet, dass** der Drucküberträger (5, 6) und/oder die Druckaufnahmemittel durch einen mechanischen Schutz, insbesondere durch eine Ummantelung, geschützt sind.

11. Differenzdrucksensor nach einem der vorherigen Ansprüche, **dadurch gekennzeichnet, dass** beide Druckaufnahmemittel (7, 12) so in dem Tank angeordnet sind, dass die Flüssigkeit bei vollem Tank beide Druckaufnahmemittel (7, 12) umschließt.

12. Differenzdrucksensor nach einem der Ansprüche 1 bis 10, **dadurch gekennzeichnet, dass** die Befestigungshöhe des zweiten Druckaufnahmemittels so gewählt ist, dass das zweite Druckaufnahmemittel auch bei als voll definiertem Tank nicht von Flüssigkeit umgeben ist.

13. Differenzdrucksensor nach Anspruch 12, **dadurch gekennzeichnet, dass** das zweite Druckaufnahmemittel einen Gasdruck oberhalb der Oberfläche der Flüssigkeit detektiert.

14. Verwendung eines Differenzdrucksensors nach einem der Ansprüche 1 bis 13 zur Bestimmung der Dichte einer Flüssigkeit

**Claims**

1.  Differential pressure sensor for measuring the liquid level of a liquid, in particular of a urea/water solution, which has been filled into a container of a metering system, wherein a first pressure-sensing means (7, 77) for measuring a pressure at the bottom of the container and a second pressure-sensing means (12, 78) for measuring a reference pressure in an upper area of the container are provided, wherein the second pressure-sensing means is arranged at such a mounting height ($h_{ges}$ - $h_{ref}$, H) in the container that the second pressure-sensing means (12, 78) is surrounded by liquid (2) at most when a liquid level is reached at which the container is defined as full, wherein the differential pressure sensor (1) has at least a first, nondeformable, liquid-resistant pressure transmitter (5), in particular for measuring the pressure at the bottom of the container (3), wherein the differential pressure sensor (1) has at least one nondeformable, liquid-resistant, second pressure transmitter (6), in particular for measuring a reference pressure in the upper area of the container (3), **characterized in that** the pressure-sensing means (7, 12) are arranged at the open end of the respective pressure transmitter (5, 6), and **in that** the differential pressure sensor (1) forms an enclosed system, wherein a pressure-transmitting medium (8) is surrounded by the pressure transmitters (5, 6) and the pressure-sensing means (7, 12), wherein the pressure-sensing means (7, 12) have a deformable part.

2.  Differential pressure sensor according to Claim 1, **characterized in that** the pressure transmitter or transmitters (5, 6) are in the form of an elongate hollow profile.

3.  Differential pressure sensor according to Claim 1 or 2, **characterized in that** the deformable part is a diaphragm, a folding bellows or a balloon.

4.  Differential pressure sensor according to Claim 1, **characterized in that** the material of the pressure transmitters (5, 6) and of the pressure-sensing means (7, 12) is resistant to the liquid in the container (3), in particular to a urea/water solution.

5.  Differential pressure sensor according to Claim 4, **characterized in that** the material of the pressure transmitters (5, 6) and of the pressure-sensing means (7, 12) is a urea-resistant thermoplastic or urea-resistant elastomer or metal.

6.  Differential pressure sensor according to one of the preceding claims, **characterized in that** the differential pressure sensor (1) is configured for use in a metering system (4) which is connected to an exhaust section of an internal combustion engine, in particular of a vehicle engine.

7.  Differential pressure sensor according to one of the preceding claims, **characterized in that** the differential pressure sensor (1) is configured for use in liquids (2) which serve as reducing agents for reducing the $NO_x$ emissions of the exhaust gas in the internal combustion engine.

8.  Differential pressure sensor according to one of the preceding claims, **characterized in that** said sensor is configured for adjusting a characteristic curve of the differential pressure sensor (1) when the container is full.

9.  Differential pressure sensor according to one of the preceding claims, **characterized in that** a control unit is configured for detecting a (sudden) increase in the level in the container.

10. Differential pressure sensor according to one of the preceding claims, **characterized in that** the pressure transmitter (5, 6) and/or the pressure-sensing means are protected by mechanical protection, in particular by an encapsulation means.

11. Differential pressure sensor according to one of the preceding claims, **characterized in that** both pressure-sensing means (7, 12) are arranged in the container in such a way that the liquid surrounds both pressure-sensing means (7, 12) when the container is full.

12. Differential pressure sensor according to one of Claims 1 to 10, **characterized in that** the mounting height of the second pressure-sensing means is selected such that the second pressure-sensing means is not surrounded by liquid even when the container is defined as full.

**13.** Differential pressure sensor according to Claim 12, **characterized in that** the second pressure-sensing means detects a gas pressure above the surface of the liquid.

**14.** Use of a differential pressure sensor according to one of Claims 1 to 13 for determining the density of a liquid.

**Revendications**

**1.** Détecteur de pression différentielle destiné à mesurer la hauteur d'un liquide placé dans la cuve d'un système de dosage, en particulier pour une solution aqueuse d'urée, dans lequel

un premier moyen (7, 77) d'enregistrement de pression qui mesure la pression au fond de la cuve et un deuxième moyen (12, 78) d'enregistrement de pression qui mesure une pression de référence dans la partie supérieure de la cuve sont prévus,

le deuxième moyen d'enregistrement de pression étant fixé dans la cuve à une hauteur ($h_{ges}$-$h_{ref}$, H) telle que le deuxième moyen (12, 78) d'enregistrement de pression ne soit entouré par le liquide (2) que lorsque la hauteur atteinte par le liquide définit que la cuve est pleine,

le détecteur (1) de pression différentielle présentant au moins un premier transmetteur (5) de pression non déformable résistant aux liquides, qui sert en particulier à mesurer la pression au fond de la cuve (3),

le détecteur (1) de pression différentielle présentant au moins un deuxième transmetteur (6) de pression non déformable et résistant aux liquides, destiné en particulier à mesurer une pression de référence dans la partie supérieure de la cuve (3), **caractérisé en ce que**

les moyens (7, 12) d'enregistrement de pression sont disposés à l'extrémité ouverte du transmetteur (5, 6) de pression correspondant,

**en ce que** le détecteur (1) de pression différentielle forme un système fermé,

**en ce qu'**un moyen (8) de transmission de pression est entouré par les transmetteurs de pression (5, 6) et les moyens (7, 12) d'enregistrement de pression et

**en ce que** les moyens (7, 12) d'enregistrement de pression présentant une partie déformable.

**2.** Détecteur de pression différentielle selon la revendication 1, **caractérisé en ce que** le ou les transmetteurs de pression (5, 6) ont la forme d'un profilé creux allongé.

**3.** Détecteur de pression différentielle selon les revendications 1 ou 2, **caractérisé en ce que** la partie déformable est une membrane, un soufflet ou un ballon.

**4.** Détecteur de pression différentielle selon la revendication 1, **caractérisé en ce que** le matériau des transmetteurs de pression (5, 6) et des moyens (7, 12) d'enregistrement de pression résiste au liquide présent dans la cuve (3) et en particulier à une solution aqueuse d'urée.

**5.** Détecteur de pression différentielle selon la revendication 4, **caractérisé en ce que** le matériau des transmetteurs de pression (5, 6) et des moyens (7, 12) d'enregistrement de pression est un thermoplastique résistant à l'urée, un élastomère résistant à l'urée ou un métal.

**6.** Détecteur de pression différentielle selon l'une des revendications précédentes, **caractérisé en ce que** le détecteur (1) de pression différentielle est conçu pour être utilisé dans un système de dosage (4) qui est raccordé au conduit de gaz d'échappement d'un moteur à combustion interne et en particulier du moteur d'un véhicule.

**7.** Détecteur de pression différentielle selon l'une des revendications précédentes, **caractérisé en ce que** le détecteur (1) de pression différentielle est conçu pour être utilisé dans des liquides (2) qui servent d'agent de réduction pour diminuer les émissions de $NO_x$ des gaz d'échappement d'un moteur à combustion interne.

**8.** Détecteur de pression différentielle selon l'une des revendications précédentes, **caractérisé en ce qu'**il est conçu pour correspondre à une ligne caractéristique du détecteur (1) de pression différentielle lorsque la cuve est pleine.

**9.** Détecteur de pression différentielle selon l'une des revendications précédentes, **caractérisé en ce qu'**il présente un appareil de commande qui détecte une augmentation (brusque) du niveau dans la cuve.

**10.** Détecteur de pression différentielle selon l'une des revendications précédentes, **caractérisé en ce que** le transmetteur de pression (5, 6) et/ou les moyens d'enregistrement de pression sont protégés par une protection mécanique et en particulier par une enveloppe.

**11.** Détecteur de pression différentielle selon l'une des revendications précédentes, **caractérisé en ce que** les deux moyens (7, 12) d'enregistrement de pression sont disposés dans la cuve de telle sorte que lorsque la cuve est pleine, le liquide entoure les deux moyens (7, 12) d'enregistrement de pression.

**12.** Détecteur de pression différentielle selon l'une des revendications 1 à 10, **caractérisé en ce que** la hauteur à laquelle est fixé le deuxième moyen d'enregistrement de pression est sélectionné de telle sorte que le deuxième moyen d'enregistrement de pression ne soit pas entouré par le liquide même lorsque la cuve est définie comme étant pleine.

**13.** Détecteur de pression différentielle selon la revendication 12, **caractérisé en ce que** le deuxième moyen d'enregistrement de pression détecte la pression de gaz présent au-dessus de la surface du liquide.

**14.** Utilisation d'un détecteur de pression différentiel selon l'une des revendications 1 à 13 pour déterminer la masse spécifique d'un liquide.

# Fig. 1

**Fig. 2**

EP 1 431 722 B1

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19755056 A1
- DE 3929344
- DE 4112559